# EUROPEAN PATENT APPLICATION

(11) **EP 0 562 262 A2**
(43) Date of publication of application: **29.09.1993**
(21) Application number: 93102411.1
(22) Date of filing: 16.02.1993
(51) Int. Cl.: B60B 33/00, A47B 53/02

(54) **Wheeled carriages, and a warehouse carriage system comprising such carriages**

(30) Priority: 21.03.1992 GB 9206228
(71) Applicant: WAGON STORAGE PRODUCTS LIMITED, Telford, Shropshire TF7 4LN (GB)
(72) Inventor: Deakin, Rex, Kingswinford West Midlands DY6 9SP (GB)
(74) Representative: Lally, William

(57) **Abstract**

A carriage for a warehouse carriage system comprises a supporting frame 6 comprising longitudinal frame members 8a, 8b, 8c and 8d, and transverse frame members arranged in pairs, 10a1, 10a2; 10b1,10b2; and 10c1,10c2. Each pair of adjacent frame members supports a plurality of wheels 18. Each adjacent pair of frame members provides axle support means afforded by coaxial holes (20 in each such adjacent pair, said holes being provided by a plunging operation to provide bosses or sleeve portions (22) extending around the holes (20) in the axial direction, the axles (24) extending through the holes and being supported by said boss or sleeve portions.

## Description

This invention is concerned with improvements relating to carriages, particularly of the kind (hereinafter referred to as being of the kind specified) as are used in track systems for the movement of items over relatively short distances.

For example, a warehouse carriage system may comprise a trackway upon which a plurality of storage units are mounted for movement between positions of close proximity, corresponding to a maximum storage density, to separated positions enabling access to the storage units to be gained. Conventionally the trackways are mounted in channels in the floor, and the storage units comprise carriages in the form of wheeled bases, upon which supporting devices, which may be in the form of racking structures, are mounted.

Conveniently the carriages comprise frame members of channel section, and conventionally axles for the wheels of the carriages are mounted on additional frame elements such as axle plates welded or otherwise secured to the frame members. This entails a complicated construction and adds to the expense of the carriage.

According to this invention there is provided a carriage of the kind specified comprising a framework comprising frame members of channel construction, and wheels supported by the framework, wherein the wheels are supported by axles extending through plunged holes in the frame members.

By plunging holes in the frame members, not only are bores provided for the reception of the axles, but also short bosses are provided to afford more extensive support for the axles.

Thus the plunging operation will involve a piercing stage, involving the removal of the centre, and a deforming operation in which metal surrounding the centre is deformed radially outwardly into a generally cylindrical form.

The bosses may be utilised to support the axle directly, or may be used to carry bearing for the axle.

If desired reinforcing members may be subsequently secured (e.g.) by welding to the frame members to support the frame members in the vicinity of the plunged holes.

Such support may be afforded by reinforcing plates, e.g. having bores which may be mounted as a tight fit over the plunged bosses, the plate lying in face-to-face contact with a portion of the frame member in which the plunged hole is formed, or may be in the form of a web.

According to this invention there is also provided a carriage for use in a track system for the movement of items over a relatively short distance, the carriage comprising frame members of channel section, and axles for the wheels of the carriage supported by the frame members, characterised in that there is provided in adjacent pairs of frame members axle support means comprising coaxial holes in each such adjacent pair of frame members, and sleeve portions extending around the holes in an axial direction, the axles extending through the holes and being supported by said sleeve portions.

The axles may be supported by said sleeve portions through the intermediary of bearings, or fixing means may be utilised to secure the axles in fixed position in relation to said holes, the wheels conveniently being supported by bearing means carried by the axles.

According to this invention there is also provided a warehouse carriage system comprising a trackway and a plurality of storage units mounted on the tracking for movement between positions of close proximity and separated positions, the storage units each comprising a carriage of the kind set out in the last eight preceding paragraphs.

There will now be given a detailed description, to be read with reference to the accompanying drawings, of two embodiments of the invention, having been selected for the purposes of illustrating the invention by way of example:
**FIGURE 1** is a perspective schematic view showing the carriage which is the first embodiment of the invention,
**FIGURE 2** is an enlarged view showing a track for the carriage;
**FIGURE 3** is a sectional view through one of the frame members of the carriage;
**FIGURE 4** is a modified form of Figure 2, showing an alternate reinforcing means; and
**FIGURE 5** is a sectional view showing the second embodiment.

The carriage which is the first embodiment of the invention typically comprises a supporting frame 6 comprising longitudinal frame members 8a, 8b, 8c and 8d, and transverse frame members arranged in pairs, 10a1,10a2; 10b1, 10b2; and 10c1, 10c2.

The frame also comprises diagonal frame members 12, and a drive motor 14, in conventional manner.

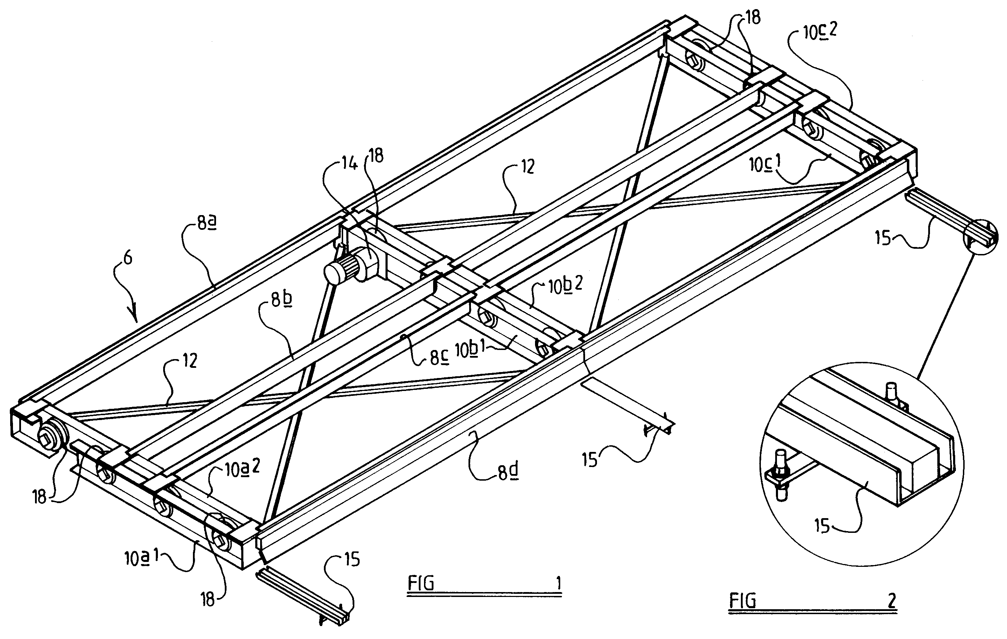

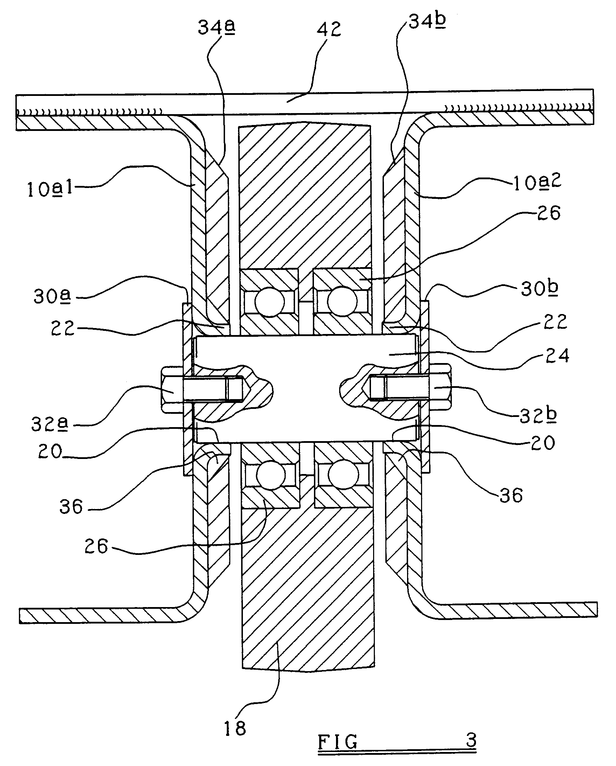

The carriage which is the first embodiment of the invention is designed to carry a racking structure extending vertically upwardly therefore, to support a plurality of items, and to be capable of travelling movement in trackways 15, which may be flanged, shown in enlarged form in Figure 2, or non-flanged. In use, the carriages are driven only short distances along the trackways, conveniently between positions in which they are in adjacent close proximity, to positions in which access may be gained between any adjacent pair of carriages.

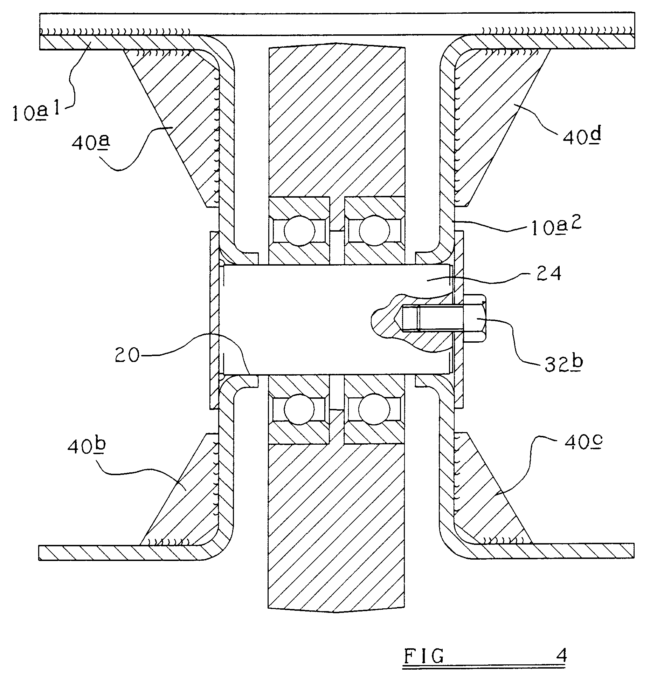

Each adjacent pair of frame members 10a, 10b or 10c supports a plurality of wheels 18. In the embodiment illustrated in Figure 3, the frame members are each provided with a plunged hole 20 for each wheel, defining short cylindrical bosses 22 providing extensive support for an axle 24.

The axle 24 supports roller bearings 26, on which the wheels 18 are carried.

The axle 24 is held in position by cover plates 30a,30b and bolts 32a, 32b.

The frame members 10a1 and 10a2 are provided with reinforcing members in the form of plates 34a, 34b, each being provided with a central bore 36 which is a tight fit around the boss 22, in which position the plate is welded to the channel-section frame member.

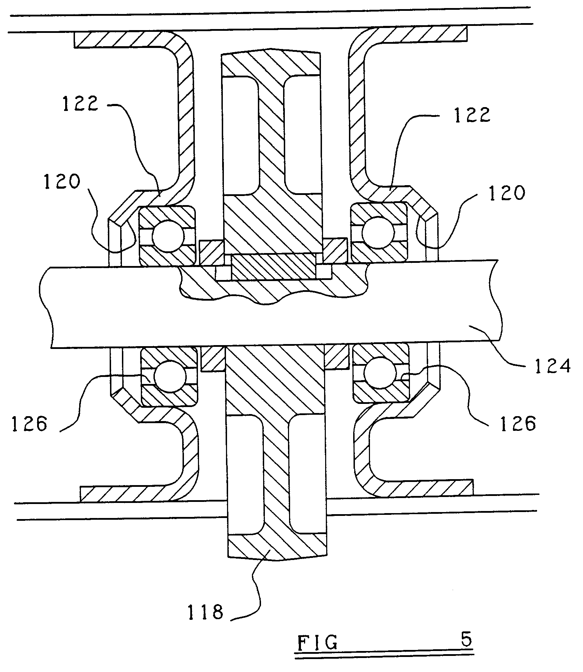

Alternatively, as is shown in Figure 4, reinforcing members may be provided in the form of webs 40 welded across the corners of the frame members.

Additionally bridge plates 42 are used to secure each pair of frame members together.

In the second embodiment illustrated in Figure 5, in which similar numerals increased by 100 have been used to indicate parts similar to those of the first embodiment, holes 120 are formed so as to provide a support for bearings 126 for the axle 124, upon which the wheel 118 is fixedly mounted. Nonetheless in the second embodiment the holes 120 are afforded by a plunging operation, involving an initial removal of metal from the side face of the channel-section frame member, prior to deformation of metal surrounding the centre, to provide a boss 122 in the form of a shallow, open-bottom cup, as shown.

The features disclosed in the foregoing description, or the accompanying drawings, expressed in their specific forms or in the terms or means for performing the desired function, or a method or process for attaining the disclosed result, may, separately or in any combination of such features, be utilised for realising the invention in diverse forms thereof.

## Claims

1. A carriage comprising a framework (6) comprising frame members (10) of channel construction, and wheels supported by the framework, characterised in that the wheels (18) are supported by axles (24) extending through plunged holes (20) in the frame members.

2. A carriage according to Claim 1 wherein the plunging operation by which the holes (20) are afforded involves a piercing stage, involving the removal of the centre, and a deforming operation in which metal surrounding the centre is deformed radially outwardly into a generally cylindrical form to provide a boss (22).

3. A carriage according to one of Claims 1 and 2 wherein the bosses (22) support the axle (24) directly.

4. A carriage according to one of Claims 1 and 2 wherein the bosses (122) carry bearings (126) for the axle (124).

5. A carriage according to any one of the preceding claims comprising reinforcing members (34, 40) secured to the frame members (10) to support the frame members in the vicinity of the plunged holes (20).

6. A carriage according to Claim 5 wherein said reinforcing members are afforded by reinforcing plates (34a, 34b) having bores (36) which are mounted as a tight fit over the plunged bosses (22), the plate lying in face-to-face contact with a portion of the frame member (10) in which the plunged hole (20) is formed.

7. A carriage comprising frame members (10) of channel section, and axles (18) for wheels of the carriage supported by some of the frame members, characterised in that there is provided in adjacent pairs of frame members (10a1, 10a2; 10b1, 10b2; and 10c1, 10c2) axle support means comprising coaxial holes (20) in each such adjacent pair of frame members, and sleeve portions (22) extending around the holes (20) in the axial direction said, axles (24) extending through the holes and being supported by the sleeve portions (22).

8. A carriage according to Claim 7 wherein the axles (124) are supported by said sleeve portions (122) by the intermediary of bearings (126).

9. A carriage according to Claim 7 comprising fixing means (32) to secure the axles (24) in fixed position in relation to said holes (20), the wheels (18) being supported by bearings means (26) carried by the axles.

10. A warehouse carriage system comprising a plurality of storage units mounted for movement between positions of close proximity, corresponding to a maximum storage density, and separated positions enabling access to the storage units to be gained, the system comprising trackways (15) mounted in channels in the floor, and the storage units comprising carriages in the form of wheeled bases, upon which supporting devices are mounted, characterised in that the carriages are in accordance with any one of Claims 1 to 9.
